# DEMANDE DE BREVET EUROPEEN

(11) **EP 1 640 238 A1**
(43) Date de publication de la demande: **29.03.2006**
(21) Numéro de dépôt: 05291988.3
(22) Date de dépôt: 23.09.2005
(51) Int. Cl.: B62B 3/18

(54) **Dispositif de fixation de sacs amovibles dans des chariots et sacs pourvus d'un tel dispositif de fixation**

(30) Priorité: 23.09.2004 FR 0410067
(71) Demandeur: Locaplast, 77600 Bussy Saint Georges (FR)
(72) Inventeur: Girard, Edouard, 94500 Champigny-sur-Marne (FR)
(74) Mandataire: Breese Derambure Majerowicz

(57) **Abrégé**

La présente invention se rapporte à un dispositif de rangement et de fixation de sacs amovibles non polluants et de longue durée dans les chariots de supermarchés, caractérisé en ce qu'il comporte des sacs suspendus aux structures des chariots dans le sens de leur largeur, par des baguettes (1) et (1') munies de systèmes d'accrochage (6) en caoutchouc, à leurs extrémités.

Dans une version préférentielle, les baguettes (1) et (1') sont creuses. Elles comportent intérieurement une baguette plus petite (8) qui coulisse pour s'adapter aux différentes largeurs des chariots qui ont des volumes coniques.

Un ressort ou un cordon élastique passe librement dans les baguettes (8) pour permettre les extensions des crochets (6).

L'invention est destinée à l'industrie de la grande distribution.

## Description

L'invention concerne un dispositif de rangement et de fixation des sacs amovibles, non polluant et de longue durée, dans les chariots des supermarchés, pour remplacer les sacs plastiques jetables.

Actuellement en ce domaine, beaucoup d'efforts de recherche sont faits pour lutter contre la pollution.

Les principales enseignes de la grande distribution y souscrivent, en procédant au remplacement des sacs plastiques par des sacs individuels plus solides et réutilisables, qu'elles vendent à très bas prix, mais qui sont pour la plupart polluants.

Il existe également des sacs de toile non polluants, très solides, donc réutilisables, qui s'adaptent aux chariots des magasins mis à la disposition de leurs clients. Mais ils ne sont pas pratiques ; ils sont de grands volumes, du style fourre-tout, avec une fermeture compliquée. Ils sont vendus très chers.

À ce jour, ces deux catégories de sacs n'ont pas rencontré beaucoup de succès, parce qu'elles ne solutionnent que partiellement les besoins particuliers des utilisateurs.

L'invention remédie à ces inconvénients parce qu'elle propose des solutions rationnelles à toutes les exigences des utilisateurs, en mettant à leur disposition un dispositif de sacs non polluants d'une très longue réutilisation, qui s'adaptent parfaitement aux chariots et sont d'une manipulation facile et pratique à positionner sur les chariots ou dans les coffres des voitures.

Les volumes des sacs sont calculés pour des remplissages qui conviennent aux plus faibles utilisateurs. Pour faciliter la manutention, la totalité du volume du chariot est répartie sur quatre sacs, dont la capacité moyenne du plus petit au plus grand volume est préservée malgré la structure graduelle du chariot.

D'une conception solide très simplifiée, le dispositif a aussi l'avantage d'être bon marché, donc d'un investissement à la portée du plus grand nombre de consommateurs.

Pour ce faire, la présente invention concerne un dispositif de fixation de sacs amovibles dans des chariots de type supermarchés, du type comprenant deux baguettes (1, 1') destinées à pourvoir la partie supérieure d'un sac, lesdites baguettes (1, 1') présentant à chaque extrémité des moyens d'accrochage (6, 6') sur les bords supérieurs d'un chariot, et elle est remarquable en ce que lesdites baguettes, de forme tubulaires, comportent un élément formant ressort dont les extrémités sont respectivement solidaires desdits moyens d'accrochage (6, 6'), ledit élément formant ressort étant formé par une tige tubulaire traversée longitudinalement par un ressort ou cordon élastique.

De préférence, la tige est constituée de deux portions (8, 8') disposées juxtaposées dans lesdites baguettes (1, 1').

Avantageusement, la tige est montée coulissante dans lesdites baguettes (1, 1').

Avantageusement, les baguettes (1, 1') et les tiges (8) comportent respectivement des échancrures (9, 9' ; 9 », 9''') pour assurer le coulissement de la tige dans lesdites baguettes (1, 1').

Avantageusement, la tige comporte à chacune de ses extrémités les plus excentrées un pas de vis coopérant avec les moyens d'accrochage (6, 6').

Avantageusement, les moyens d'accrochage (6, 6') comportent une ou plusieurs alvéoles de fixation sur le bord supérieur dudit chariot.

Avantageusement, les moyens d'accrochage (6, 6') sont en caoutchouc.

La présence invention concerne également un sac pourvu d'un dispositif de fixation tel que défini ci-dessus.

On comprendra mieux l'invention à l'aide de ma description faite ci-après à titre purement explicatif, d'un mode de réalisation de l'invention, en référence aux figures annexées:
- la figure 1 illustre une vue en perspective partielle d'un sac pourvu d'un dispositif de fixation selon l'invention ;
- la figure 2 illustre une vue détaillée partielle dudit dispositif de fixation ;
- la figure 3 illustre des vues en coupe d'une baguette et d'une tige constituant ledit dispositif de fixation ; et
- la figure 4 illustre une vue latérale de la tige.

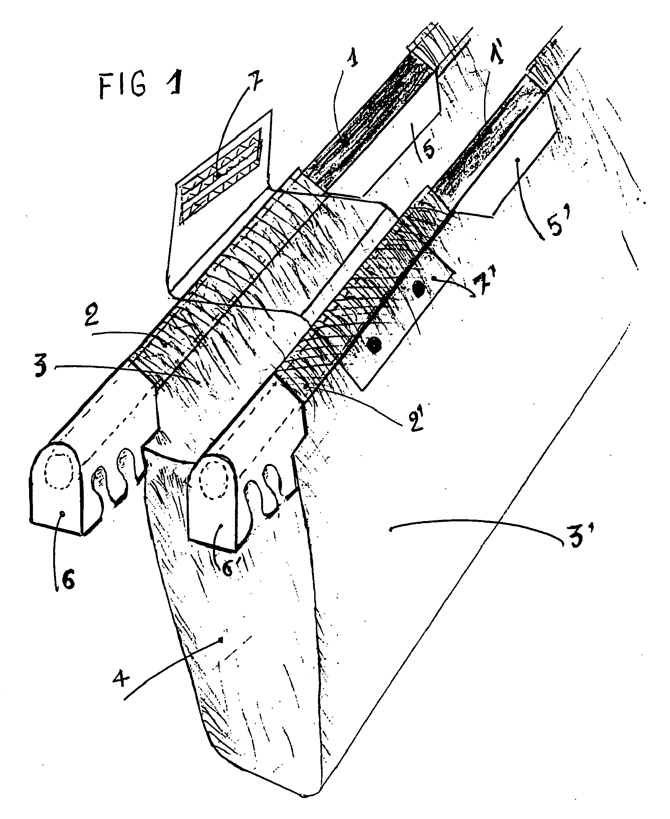

La figure 1 représente le sac N° 1, qui se trouve en tête du chariot et qui a la plus grande capacité. Il se décline en trois autres sacs graduellement de moindre contenance. Tous les sacs ont la même conception : ils se composent tous de deux baguettes en forme de tube (1) et (1') qui traversent les ourlets (2) et (2') qui retiennent le tablier de toile du sac (3) et (3') dont les côtés sont fermés par un rajout de toile (4) qui donne aux sacs un volume en forme de parallélépipède.

Le sac ainsi formé a une profondeur calculée d'après le volume, en rapport avec le poids souhaité du remplissage, pour rester à la portée de tous. Le sac se suspend par les crochets de caoutchouc (6) et (6') qui s'adaptent sur les structures supérieures du chariot dans le sens de leur longueur.

Les sacs comportent deux poignées de manutention réalisées par les baguettes (1) et (1') dégagées pour le passage des mains par les échancrures (5) et (5') pratiquées dans les toiles (3) et (3').

La fermeture du sac, dans une réalisation préférentielle, se fait par deux attelles (7) et (7') cousues et rivetées, qui sont munies de scratches, elles relient les deux pans du sac en se fixant sur le pan opposé.

Les crochets en caoutchouc en bout des baguettes (6) et (6') peuvent comporter une ou plusieurs alvéoles de fixation au chariot pour se fixer aux différentes largeurs de celui-ci.

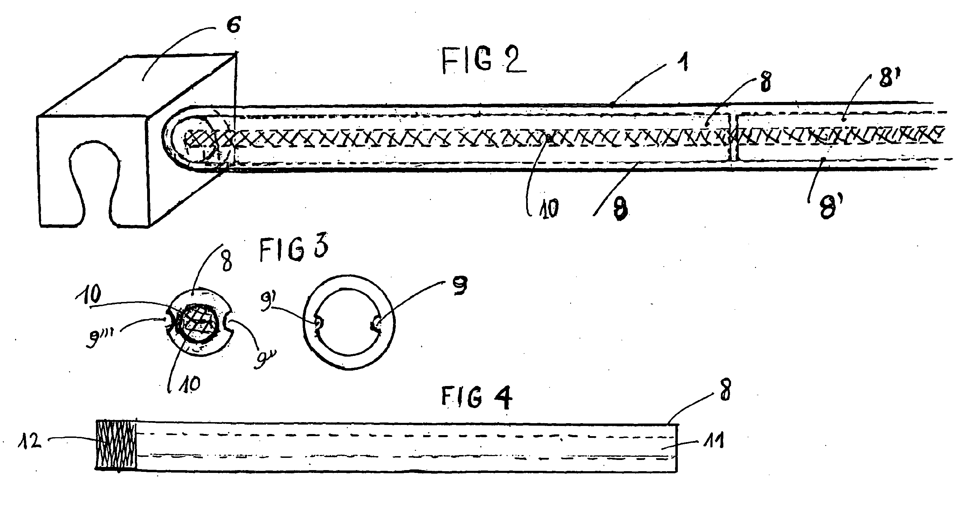

Dans un mode préférentiel, les crochets de caoutchouc (6) et (6') ne comportent qu'une alvéole de fixation (figure 2) qui s'adapte à toutes les largeurs du chariot par la combinaison d'un système à glissière qui permet l'allongement ou le rétrécissement des longueurs des tiges intérieures (8) et (8') qui supportent les fixations des crochets (6) et (6')

Les baguettes (1) et (1') qui sont des tubes d'une certaine épaisseur sont de préférence en plastique rigide et réalisées par extrusion.

Lesdites baguettes comportent deux rainures (9) et (9') qui servent de glissière pour le coulissement des deux tiges intérieures (8) et (8'), qui sont creuses et percées en leur centre (11) sur toute leur longueur pour permettre le passage d'un ressort ou d'un cordon élastique de rappel ou d'extension (11) des deux tiges (8) et (8') (figure 3).

Les tiges sont de préférence moulées injectées dans une matière plastique à fort coefficient de résistance. Elles se juxtaposent au milieu des baguettes (1) et (1'). Elles peuvent se libérer facilement et se tendre sous l'effet de l'étirage du cordon élastique (10) pour permettre le positionnement des crochets aux différentes largeurs du chariot.

La figure 4 représente l'une des tiges creuses (8) qui permettent le passage du cordon (10) ; elle coulisse à l'intérieur des baguettes tubes (1) et (1'). À leurs extrémités, ces tiges comportent des filetages (12) qui s'adaptent aux crochets (6).

Le cordon élastique (10) traverse les deux tiges (8) et (8'). Il est retenu à chaque extrémité des tiges par un noeud ou un arrêtoir qui se situe dissimulé à l'intérieur des crochets (6) et (6').

## Revendications

1. Dispositif de fixation de sacs amovibles dans des chariots de type supermarchés, du type comprenant deux baguettes (1, 1') destinées à pourvoir la partie supérieure d'un sac, lesdites baguettes (1, 1') présentant à chaque extrémité des moyens d'accrochage (6, 6') sur les bords supérieurs d'un chariot, **caractérisé en ce que** lesdites baguettes, de forme tubulaires, comportent un élément formant ressort dont les extrémités sont respectivement solidaires desdits moyens d'accrochage (6, 6'), ledit élément formant ressort étant formé par une tige tubulaire traversée longitudinalement par un ressort ou cordon élastique.

2. Dispositif de fixation selon la revendication 1, **caractérisé en ce que** la tige est constituée de deux portions (8, 8') disposées juxtaposées dans lesdites baguettes (1, 1').

3. Dispositif de fixation selon la revendication 1 ou la revendication 2, la tige est montée coulissante dans lesdites baguettes (1, 1') .

4. Dispositif de fixation selon la revendication précédente, **caractérisé en ce que** les baguettes (1, 1') et les tiges (8) comportent respectivement des échancrures (9, 9' ; 9 », 9''') pour assurer le coulissement de la tige dans lesdites baguettes (1, 1').

5. Dispositif de fixation selon l'une quelconque des revendications précédentes, **caractérisé en ce que** la tige comporte à chacune de ses extrémités les plus excentrées un pas de vis coopérant avec les moyens d'accrochage (6, 6').

6. Dispositif de fixation selon l'une quelconque des revendications précédentes, **caractérisé en ce que** les moyens d'accrochage (6, 6') comportent une ou plusieurs alvéoles de fixation sur le bord supérieur dudit chariot.

7. Dispositif de fixation selon l'une quelconque des revendications précédentes, **caractérisé en ce que** les moyens d'accrochage (6, 6') sont en caoutchouc.

8. Sac pourvu d'un dispositif de fixation selon l'une quelconque des revendications précédentes.
